# EUROPEAN PATENT APPLICATION

(11) **EP 4 332 441 A1**
(43) Date of publication of application: **06.03.2024**
(21) Application number: 22192798.1
(22) Date of filing: 30.08.2022
(51) Int. Cl.: F24C 15/20

(54) **FILTER ASSEMBLY AND COMBINATION APPLIANCE**

(71) Applicant: ELECTROLUX APPLIANCES AKTIEBOLAG, 105 45 Stockholm (SE)
(72) Inventor: LEYH, Björn, 91541 Rothenburg ob der Tauber (DE); PUOTI, Eduardo, 91541 Rothenburg ob der Tauber (DE); PALLANTE, Valerio, 47100 Forli (IT); LEO, Orlando, 47122 Forli (IT)
(74) Representative: Electrolux Group Patents

(57) **Abstract**

The present invention is related to a filter assembly (52) for a fume extraction unit (14). The filter assembly (52) comprises at least a first filter element (52') and a second (56) filter element, which at least first (52') and second (56) filter elements are arranged in or allocated to an air duct (44) and positioned adjacent to each other.

At least the first filter element (52') comprises a first coupling or supporting element (76; 60), which interacts with at least a part (70) or a portion or a section of the second filter element (56) and/or with a second coupling element (74a, 74b) arranged at or allocated to the second filter element (56). The interaction between the first coupling or supporting element (76; 60), on the one hand, and the at least a part (70) or a portion or a section of the second filter element (56) and/or with a second coupling element (74a, 74b), on the other hand, enables a joint handling or manipulation, in particular a joint relocation, of the first (52') and second (56) filter elements.

Moreover, a fume extraction unit (14) and a combination appliance (10) comprising such a filter assembly (52) are disclosed, too.

## Description

The present invention relates to a filter assembly for a fume extraction unit according to claim 1. The present invention relates further to a fume extraction unit comprising a filter assembly according to claim 10 and to a combination appliance comprising a cooking hob and an extraction device according to claim 14.

In order to support persons in performing domestic work, household appliances of different kinds are known. In particular, cooking processes are performed using cooking appliances. For example, cooking hobs comprise cooking zones for placement of cookware receiving the food to be cooked. The cooking zones are generally arranged on a cooktop, in particular a glass ceramic cooktop, which forms an upper wall of the cooking hob. During cooking processes under use of such cooking hobs, cooking fumes are generated, which are distributed over the cooking area. In order to avoid these cooking fumes to be spread throughout the entire kitchen space, it is common to arrange an extraction hood above the cooking area for an aspiration of these fumes. Moreover, there are also cooking hobs known, in which a cooking fumes extraction functionality is integrated. More specifically, such kind of a combination appliance comprises a cooking hob and an integrated downdraft extraction device with an extraction opening in the cooktop of the cooking hob. With this combination of a cooking hob and an extraction device, a compact solution is provided. Extraction hood or extraction device can be operated in parallel to the cooking hob, thereby sucking in those cooking fumes in order to filter out particles and tiny droplets and/or to blow the cooking fumes to the outside of the building. Especially in a kitchen arrangement, in which the cooking area is positioned distant from an outer wall, the extraction hood or the combination appliance with a downdraft extraction device usually operates with recirculating air, which is blown out into a kitchen cabinet or directly into the ambient air after it has been filtered. To this end, it is known to arrange an odour filter element in addition to a grease filter element in an air duct of the extraction hood or the extraction device.

The international patent application WO 2022/028724 A1 discloses a combination appliance with a filter unit including a grease filter element and an odour filter element arranged in horizontal orientation in a filter carrier. The odour filter element, which allows grease particles to penetrate, is arranged on top of, i. e. upstream of, the grease filter element and either rests on the grease filter element or is fixed to the filter carrier in a releasable manner. In order to remove the grease filter element, particularly for cleaning it e. g. in a dishwasher, the odour filter element has to be removed at first before getting access to the grease filter element, which can be grabbed only in a second handling step.

It is an object of the present invention to provide a filter assembly for a fume extraction unit, which allows an easy maintenance by reducing handling steps. Moreover, a fume extraction unit comprising a filter assembly and/or a combination appliance comprising a cooking hob and an extraction device with a filter assembly shall be provided, which is or are designed in a way allowing a simplified access to the filter assembly and for which the handling of the filter assembly is further facilitated.

The object is achieved for a filter assembly by the combination of features of claim 1.

According to a first aspect of the present invention, a filter assembly for a fume extraction unit comprises at least a first filter element and a second filter element. The at least first and second filter elements are positioned adjacent to each other and may be arranged or arrangeable in or allocated or allocatable to an air duct, specifically an air duct of the fume extraction unit. At least the first filter element, in particular the first and the second filter elements, comprises a first coupling or supporting element, which interacts with at least a part or a portion or a section of the second filter element and/or with a second coupling element arranged at or allocated to the second filter element. This interaction between the first coupling or supporting element, on the one hand, and the at least a part or a portion or a section of the second filter element and/or a second coupling element, on the other hand, enables a joint handling or manipulation, in particular a joint relocation, of the first and second filter elements.

The fume extraction unit is in particular an extraction hood or an extraction device of a combination appliance, which further comprises a cooking hob. The filter assembly and/or the first and second filter elements are particularly supported by a filter carrier. Moreover, the first and second filter elements particularly include at least one of a grease filter element, an odour filter element, an air purification filter element or unit, and a moisture absorbing element. Said air purification filter element or unit is for example a HEPA or a PECO filter element or unit. There may also filter elements by provided, which include more than only one filter functionality related to the particles to be separated from the air passing through the filter element. More specifically, such kind of multiple filters include grease filter elements with integrated odour removal functionality.

By proposing a filter assembly according to the features of claim 1, notably with at least first and second filter elements that are positioned adjacent to each other and are coupled with each other enabling a joint handling or manipulation of the at least two filter elements, a filter assembly is provided, which allows an easy maintenance by reducing handling steps.

The first and second filter elements are advantageously detachably and/or mechanically coupled with each other. Detachability in this respect means that the connected first and second filter elements may be separated from each other, in particular for an individual handling of these two filter elements. With this individual or separated handling, servicing activities can be performed individually by taking different service intervals for different filter types into account.

In some implementations, the coupling and/or an uncoupling process between first and second filter elements includes a sliding movement of one of the first and second filter elements against the other one of the first and second filter elements. In particular, said sliding movement is in the direction of a filter surface, which may also include the option of first and second filter elements with filter surfaces arranged in parallel, so that the sliding movement is performed in that the parallel filter surfaces of the first and second filter elements slide against one another, at least viewed relatively. More particularly, the sliding movement is performed or performable in the direction of a main surface of at least one of the first and second filter elements. Additionally, or alternatively, the coupling and/or decoupling process between first and second filter elements may include a pivoting motion between first and second filter elements. This pivoting motion is preferably performed or performable after a partial coupling of the first and second filter elements. The partial coupling particularly comprises a lateral engaging and/or linking operation, more in detail, at a peripheral space or section of at least one of the first and second filter elements. More particularly, the partial coupling may be realized by an engaging and/or linking of frame sides of the first filter element and the second filter element, specifically frame sides that are assigned to each other. For example, the coupling is performed by the second filter element engaging and/or being hooked in a frame section of the first filter element by means of engaging or hooking means.

According to embodiments, the interaction between the first coupling or supporting element, on the one hand, and the at least a part or a portion or a section of the second filter element and/or with a second coupling element, on the other hand, is based on at least one of a snapping or latching mechanism, a clipping or clinching mechanism, a screw connection, a magnetic force coupling, a bayonet coupling, a keyhole mounting, and an engagement and/or insertion of at least one flap or lug, particularly in a frame part or frame section.

One particularly preferred embodiment of a filter assembly is characterized in that the second filter element comprises flaps or lugs arranged at opposite sides of the, particularly rectangular, second filter element, which flaps or lugs engage with a, preferably U-shaped in cross-section, filter frame of the, particularly also rectangular, first filter element.

Moreover, at least one coupling or supporting element may be included, which comprises a spring element or a spring-loaded means, preferably a spring-loaded hook. The spring element or spring-loaded means are particularly arranged at a first one of the first and second filter elements and engages with a second one of the first and second filter elements. More specifically, the spring element or spring-loaded means engages behind a frame section of the second one of the first and second filter elements. The expressions "a first one of the first and second filter elements" and "a second one of the first and second filter elements" mean that the spring element or the spring-loaded means may be arranged at one of these two filter elements, which may either be the first filter element or the second filter element, and the spring element or spring-loaded means may engage with the other one of the two filter elements, which may, respectively, either be the second filter element or the first filter element.

According to a specific embodiment, at least the second filter element, preferably both the first and the second filter element, is vertically aligned or is inclined from the vertical. Moreover, at least a part of a bottom section of the second filter element rests on the first filter element, in particular on a bottom section of the first filter element, when the filter assembly is in its operating position. The second filter element particularly assumes this position resting with its bottom section on the second filter element due to gravity. The bottom section of the first filter element and/or the bottom section of the second filter element are preferably a lower frame part of the first and/or second filter element. The coupling and exact assignment of the bottom section to the first filter element may in this case be the previously described engagement of at least one flap in the filter frame of the first filter element, in particular in a, preferably U-shaped in cross-section, bottom frame part or section of the first filter element.

In particular, at least one of the at least first and second filter elements is of a flat shape. More particularly, this filter element is or comprises a flat rectangular filter screen. A preferred solution is characterized in that all of the at least first and second filter elements are flat and favourably rectangular.

In some implementations, the filter assembly comprises a plurality of filter elements, specifically a least a first, a second and a third filter elements. For example, a filter assembly for a fume extraction unit can include two grease filter elements, particularly with different filtration degrees, and one odour filter element, attached to one another one behind the other. The plurality of filter elements are preferably connected in series. It may be further, or additionally, provided that these multiple filter elements are interconnected at least in pairs.

The object is further achieved for a fume extraction device by the combination of the features of claim 10.

According to a second aspect of the present invention, a fume extraction unit comprises a filter assembly as disclosed herein, particularly as previously described by embodiments. The filter assembly is arranged in or allocated to an air duct of the fume extraction unit. The fume extraction unit particularly further comprises a, preferably detachable, filter carrier for the arrangement of the filter assembly in the fume extraction unit. More specifically, also the filter carrier may be arranged in or allocated to the air duct of the fume extraction unit.

By proposing a fume extraction unit according to the features of claim 10, notably a fume extraction unit with a filter assembly as herein disclosed and being arranged in or allocated to an air duct of the fume extraction device, the fume extraction unit is designed in a way allowing a simplified access to the filter assembly, further facilitating the handling of the filter assembly, specifically for its assembling and/or disassembling.

At least a first one of the at least first and second filter elements of the filter assembly, which is for example a particle filter, preferably for grease particles, may be supported by said filter carrier. This filter may be arranged vertically or horizontally in the filter carrier. One specific embodiment is characterized by an inclined filter, preferably a flat filter element arranged in the filter carrier in an inclined orientation. The second one of the at least first and second filter elements of the filter assembly, which is for example an odour filter, may also be supported by the filter carrier. Preferably, however, this second one is supported by the first one of the at least first and second filter elements.

According to a preferred embodiment, the filter assembly and/or the filter carrier is or are configured or designed to enable a joint detachment of the at least first and second filter elements or an isolated detachment of a first one of the at least first and second filter elements from a second one of the at least first and second filter elements. This joint or isolated detachment is particularly at the user's discretion, and it may depend on reaching a particular service interval indication. Said isolated detachment of the first one of the at least first and second filter elements from the second one is in particular performable without a detachment of the second one of the at least first and second filter elements from the filter carrier. That way, manual interaction in case of a service operation may be further simplified and related efforts are reduced.

The fume extraction unit, especially the filter assembly and/or at least one of the first and second filter elements and/or the filter carrier, may comprise at least one coding means for securing a correct arrangement of at least one of the first and second filter elements in the fume extraction unit, in particular in the filter carrier of the fume extraction unit. Additionally, or alternatively, at least one sensing means may be comprised, which is configured to monitor such a correct arrangement of the first and/or second filter element(s). Preferably, coding and/or sensing means are included in order to secure and/or monitor a correct assignment of first and second filter elements relative to each other.

The object may be also achieved by:
A filter assembly for a fume extraction unit, in particular an extraction hood or an extraction device of a combination appliance, further comprising a cooking hob, or a fume extraction unit comprising a filter assembly, the filter assembly including at least a first filter element and a second filter element, which are determined or made available to be determined based on a user's selection from a plurality of different types of filter elements provided for the fume extraction unit. This may mean that the filter assembly is compiled by the user, who is offered a plurality of different types of filter elements and/or a plurality of filter elements with different filter degrees, based on specific user's needs and/or on environmental conditions. The offered filter elements particularly include different types of grease filter elements, odour filter elements, air purification filter elements or units and/or moisture absorbing elements. The selected filter elements may be configured to be coupled with each other or may be designed to be implemented in the fume extraction device and/or in a filter carrier thereof in an isolated manner. This type of filter assembly may also be a specific embodiment of the herein disclosed, particularly previously described, fume extraction unit.

Finally, the object is also achieved for a combination appliance comprising a cooking hob and an extraction device by the combination of the features of claim 14.

According to a third aspect of the present invention, a combination appliance comprises a cooking hob and an extraction device. The combination appliance may include, where applicable, any of the features of the previously described embodiments. The cooking hob comprises a cover plate or worktop, which has an opening or a recess formed therein. The extraction device is arranged below the cooking hob, in particular below the cover plate or worktop of the cooking hob. The extraction device preferably is or comprises the fume extraction unit as herein disclosed, particularly as illustrated with anyone of the previously described embodiments. The extraction device comprises a fan for sucking air from the area above the cooking hob through the opening or recess of the cover plate or worktop and conveys it through an air duct of the extraction device. Moreover, the extraction device comprises the filter assembly as disclosed herein, more specifically as provided by anyone of the previously described embodiments, including the at least first and second filter elements. The filter assembly is arranged in or allocated to the air duct of the extraction device. Finally, the extraction device also comprises an outlet opening for exhausting the conveyed air, in particular into the ambient air. The filter assembly is preferably arranged or arrangeable upstream of the fan and downstream of the opening or recess. One preferred embodiment is characterized in that the at least first and second filter elements comprise at least one particle filter, which may be a grease particle filter, for removing particles from the air sucked in, and/or at least one odour filter for removing odours from the air, which has been sucked in through the opening or recess. The odour filter is favourably a carbon or charcoal filter element. At least one of said particle filtering means and odour filtering means may include one or more filter elements that are arranged downstream behind each other, for example filter elements having different filter designs for different filtering purposes, e.g. with different filtering degrees.

The cooking hob may be of any type including electric or gas cooking hobs. In particular, an induction cooking hob is a part of the combination appliance. The cooking hob may further be an autarkic cooking appliance, particularly integrated in a countertop of kitchen furniture, or it may be part of a stove.

A top surface of the cover plate or worktop, which is accessible to a user of the combination appliance, may be used for putting cookware thereon, specifically in order to perform a cooking process. To this end, the cooking hob preferably comprises at least one heating element defining a cooking zone on the cover plate or worktop. The cover plate or worktop may be of any suitable design or material, but favourably it is made out of glass, notably of glass ceramics.

According to a preferred solution for the fume extraction unit, a filter carrier is further comprised, which receives and/or supports the filter assembly or at least one of the first and second filter elements. More specifically, at least the first filter element is supported by the filter carrier.

In some implementations, the filter assembly and/or at least one of the first and second filter elements of the filter assembly and/or the filter carrier is or are removable from the combination appliance. Said removal is preferably executable through the opening or recess. That way, the user of the combination appliance only needs to gain access to the interior of the appliance through the recess or opening, preferably without any excessive disassembly of any housing parts. In particular, the removal of any of these elements and/or of the assembly may be performed either after removal of a lid or grid included in the combination appliance, wherein the lid or grid covers or is configured to cover the opening or recess of the cover plate or worktop. Alternatively, the removal of said elements and/or assembly may be executable in combination with the lid or grid, i. e. by a joint manipulation. This alternative solution may be advantageous with respect to a minimization of handling steps during service activities.

Said lid may be a cover element covering the opening or recess at least during the non-activated state of at least the extraction device in order to prevent articles or particles from falling into the opening or the recess. The lid may be arranged in a small distance, but in parallel to the cover plate or worktop of the cooking hob, just preventing a falling in from above, but allowing a lateral intake for the cooking vapours. Preferably, however, the lid prevents an entire intake during the non-activated state of the extraction device and is removably or pivotably arranged at the cover plate or worktop in order to be opened during an operational phase of at least the extraction device. If a grid is used instead of such a lid or cover element for entire coverage, larger items are prevented from falling into the opening or recess, but basically tiny items or fluids may find this way. To this end, in order to prevent an uncontrolled fluid penetration into the interior of the combination appliance, the grid may comprise guiding means for a controlled guiding of the fluid towards a defined destination, notably into a liquid collector arranged inside of the combination appliance.

The combination appliance may be structured in that way that the filter assembly is only removable as a whole or even only in combination with the filter carrier, in which it may be arranged. Preferably, however, the filter assembly may be removable in single parts, i. e. the first filter element or the second filter element may be individually removable from the combination appliance, while further components, i. e. the other one of the first and second filter elements and/or the filter carrier may remain in its or their operating position(s). For this individual removal, the coupling between first and second filter elements is favourably disconnectable directly, when in the first and second filter elements are in their operating positions.

Finally, the filter assembly or the fume extraction unit or the combination appliance as disclosed herein, in particular as previously described, may enable a tool-free assembly and/or disassembly of at least one of the first and second filter elements, preferably of the first and second filter elements coupled with each other. An even more preferred solution provides for an assembling and/or disassembling of the entire filter assembly without any tools. This increases the ease of use during the operation of the combination appliance and promotes the user's preparedness for regular maintenance activities, particularly for cleaning or replacing filter elements or filtering means.

In order to further facilitate service or maintenance activities, an illumination element may be arranged in the opening or recess, preferably in or at the filter assembly or the filter carrier. When illuminated, the illumination means provide a lighting of the filter surface for inspection purposes. That way, a degree of pollution, particularly any grease deposits on the filter surface or frame can be identified. Said illumination element is preferably an LED. The illumination element is particularly arranged in a way as to have a best illumination level as well as to keep the removability of the filter assembly or filter carrier ensured. Preferably, the illumination element is configured to automatically switch on when the lid or grid is removed from the cover plate or worktop.

Novel and inventive features of the present invention are set forth in the appended claims.

The present invention will be described in further detail with reference to the drawings, in which
- Fig. 1: is a perspective view of a combination appliance comprising a cooking hob and a downdraft extraction device installed in a kitchen cabinet;
- Fig. 2: is a cross-sectional perspective view of the disassembled combination appliance of Fig. 1 with a frontal surface cut away;
- Fig. 3: is a rear view of the combination appliance of Fig. 2;
- Fig. 4: is a schematic front view of the combination appliance of Fig. 2, but with a first embodiment of a filter assembly;
- Fig. 5: is the filter carrier of the combination appliance of Fig. 2 in isolated illustration removed from the appliance including a second embodiment of a filter assembly;
- Figs. 6,7: illustrate filter elements for a first example of the second embodiment according to Fig. 5;
- Figs. 8 to 10: illustrate the filter elements according to Figs. 6 and 7 assembled to the second embodiment of the filter assembly in different views; and
- Fig. 11: illustrates isolated filter elements for a second example of the second embodiment according to Fig. 5, ready to be coupled with each other.

In all figures the same or equivalent part are marked with the same reference numbers.

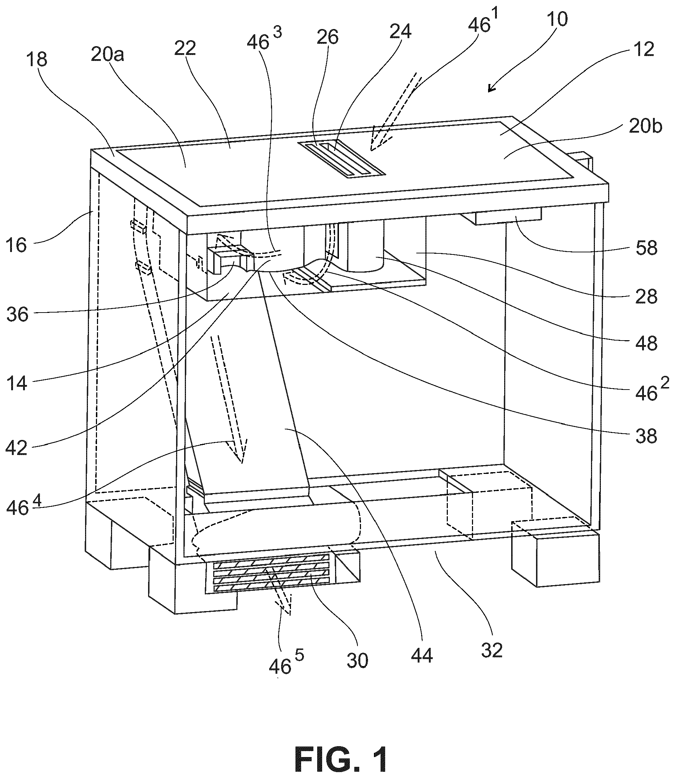

Fig. 1 illustrates a combination appliance 10 comprising a cooking hob 12 and a downdraft extraction device 14 installed in a kitchen cabinet 16. The cooking hob 12 is implemented in a cutout of a kitchen countertop 18 forming a top cover plate of the kitchen cabinet 16. The downdraft extraction device 14 is configured to take away cooking vapours occurring during cooking processes, in particular when cooking with uncovered cookware. The cooking hob 12 comprises cooking regions 20a, 20b arranged on a left half and a right half of a worktop 22 of the cooking hob 12, which left and right halves are separated from each other by a suction opening 24 for an intake of the cooking vapours, the suction opening 24 being arranged alongside a worktop centreline. The suction opening 24 is covered by a cover grid 26 for preventing items, e.g. cookware, to fall into the suction opening 24. Instead of the cover grid 26 a lid may be used for entirely covering the suction opening when the extraction device 14 is out of use, but for the operation of the extraction device 14 the lid is pivotable into an upright open position.

A casing 28 of the extraction device 14 is shown in Fig. 1 in transparent illustration. Said casing 28 provides a closed outer shell or first channel for a flow of the sucked-in cooking vapours on their way from the suction opening 24 to an exhaust opening 30 in a base area 32 of the kitchen cabinet 16. Said exhaust opening 30 is also covered, namely by an outlet grille 34. The flow of the sucked-in cooking vapours through the extraction device 14 is driven by the operation of an extraction fan 36 arranged inside of the casing 28. Said extraction fan 36 comprises a bottom-sided intake opening 38 for sucking the cooking vapours from the interior space of the casing 28.

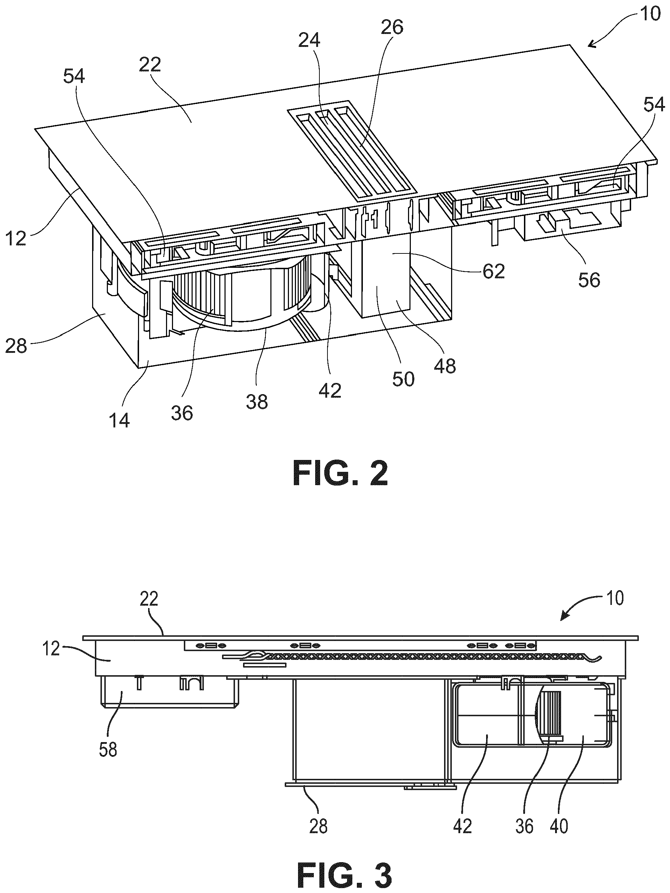

As illustrated by Fig. 3, which is a rear view of the combination appliance 10, a rear-sided fan outlet 40 is arranged for a horizontal exit of the air blown out backwards from the extraction fan housing 42. The fan outlet 40 is connected to a first end of an air duct 44 designed as a rectangular tube and forms a second channel arranged downstream of the above-mentioned first channel. Directly at the passage from the fan outlet 40 to the air duct 44, an air duct bending by 90 degrees is implemented, which redirects the air flow from horizontal to vertical downwards. The air duct 44 may be guided alongside a rear side of the kitchen cabinet 16 and may be bent again by 90 degrees close to a rear lower edge of the kitchen cabinet 16 in order to direct the airflow towards exhaust opening 30 in the base area 32 of the kitchen cabinet 16. Accordingly, the second end of the air duct 44 is connected to the exhaust opening 30. The embodiment illustrated in Fig. 1 shows a solution of the air duct 44 with an inclined section of its downwardly directed portion, directed slightly to the right. Naturally, a solution with said portion arranged in an exact vertical direction is considerable as well.

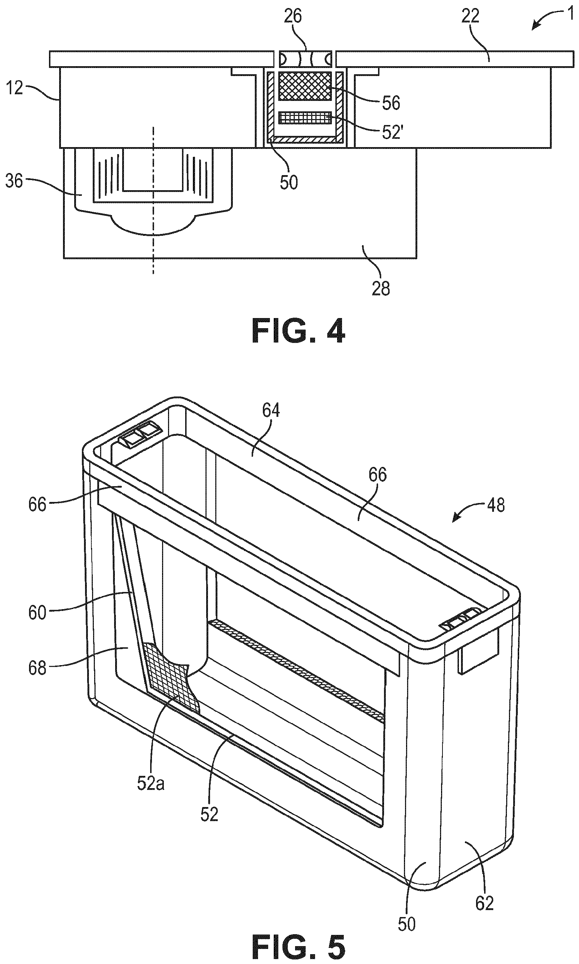

The course of the cooking vapours from the cooking area through the extraction device 14 to a re-entry into ambient air is illustrated in Fig. 1 by dotted arrows 46¹ to 46⁵. On their way through the extraction device 14, the cooking vapours pass through a filter arrangement 48, which is arranged downstream directly behind the suction opening 24. Said filter arrangement 48, which will be described in more detail in different examples further down below with reference to Figs. 5 to 11, includes a filter carrier 50 for providing a purification of the conveyed air.

The cross-sectional view of Fig. 2 further shows two power boards 54, one for the left cooking region 20a and one for the right cooking region 20b, the power boards 54 providing cooking zones in the left and right cooking regions 20a, 20b with electrical power. In the present embodiment, the cooking hob 12 is an induction cooking hob and the cooking zones are defined by induction coils (not shown) that are arranged below the worktop 22 of the cooking hob 12. Attached to the bottom side of the power board 54 assigned to the right cooking region 20b, a further circuit board is arranged forming a control electronics 58 for the combination appliance 10.

Fig. 4 illustrates schematically a front view of a combination appliance 10 having a structure similar to that one of Figs. 1 to 3. The extraction fan 36 and the filter carrier 50 are presented in a cross-sectional illustration. The filter assembly of Fig. 4 forms a first embodiment according to the present invention. Within the filter carrier 50 a grease filter element 52' is positioned in a horizontal orientation, so that the aspirated cooking vapours pass through the grease filter element 52' in a direction orthogonally to the filter surface. On top of the grease filter element 52' a carbon filter element 56 for filtering out odours from the cooking vapours is arranged also in horizontal orientation. The carbon filter element 56 may be supported by the grease filter element 52', which itself is releasably fixed to the filter carrier, without any particular fixation. Naturally, the carbon filter element 56 may also be fixed to the filter carrier 50 in a releasable manner, too, and may be spaced from the grease filter element 52', as indicated in the schematic illustration.

Generally, the selection of the grease filter element 52' and the carbon filter element 56 according to Fig. 4 may be arbitrary as regards the order of arrangement, and also as regards the types of filter elements. More specifically, the combination appliance 10 may be structured in such a way that the manufacturer and/or the user of the combination appliance 10 is or are free in the decision, which types of filter elements 52', 56 shall be implemented in the combination appliance 10, and in which order. More specifically, the user may receive with the purchase of the combination appliance a plurality of different filter elements, which may differ in their types (e. g. grease, odour, moisture absorbing, and/or air purification and/or sanitization filter elements) and/or in their level of filtration degrees. The user may then be enabled to select those filter elements for the filter assembly of the purchased appliance, potentially using expert advice, which are best suitable for meeting the personal requirements. But not just the correct filter elements may be selectable, also the order of arrangement for the selected filter elements may be individually adjustable.

A second embodiment of the inventive filter assembly is presented by Fig. 5, showing the filter arrangement 48 of Fig. 1 being removed from the suction opening 24 and shown in an isolated illustration. In order to remove the filter arrangement 48, the cover grid 26 has to be removed prior to the removal of the filter arrangement 48. However, according to a modification, the cover grid 26 and the filter arrangement 48 may be coupled together, so that the filter arrangement 48 may be removed together with the cover grid 26 in a single movement.

According to Fig. 5, a rectangular filter assembly 52, formed by an assembly of a grease filter element 52' and a carbon filter element 56 arranged in parallel (as will be described and illustrated more in detail further down below), is positioned in and supported by the filter carrier 50. The filter carrier 50 includes a carrier housing 62 and a carrier frame 64, which are separable from each other. In an assembled state, the carrier frame 64 forms an upper face of the filter carrier 50 and, in that, covers the upper side of the carrier housing 62. The filter assembly 52 is detachably coupled to one of the longer frame parts 66 of the rectangular carrier frame 64, but removable from the carrier housing 62 when coupled with the carrier frame 64. The filter assembly 52 has a circumferential frame 60 surrounding a filter surface, which is symbolically indicated in Fig. 5 with a partial surface area by 52a. The symbolic filter surface 52a provides a purification of the conveyed air. The rectangular filter assembly 52 is arranged in the filter carrier 50 in an inclined orientation, which is favourable with respect to the airflow making a turn from a topside intake to a horizontal outlet.

As shown in Fig. 1 by dotted arrows 46¹ and 46², the flow of cooking vapours is conducted from the suction opening 24 and the open top side of the filter arrangement 48 through the symbolic filter surface 52a before leaving the filter arrangement 48 by penetrating the lateral surface 68 facing the fan 36. In order to provide an extensive passage for the airflow on its way out from the carrier housing 62, the lateral surface 68 is open to a great extent, which results in remaining merely a frame section of the lateral surface 68.

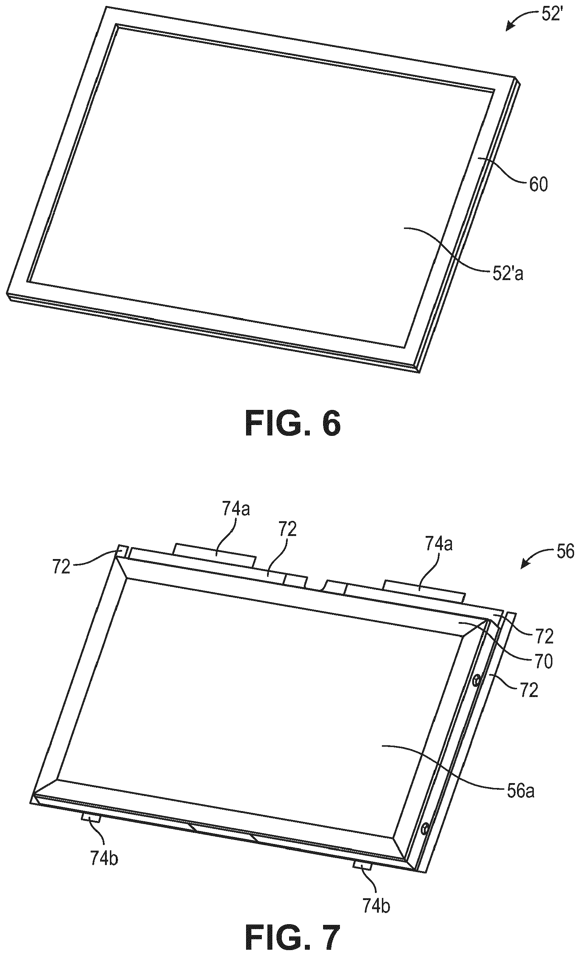

As previously indicated, not only the entire filter arrangement 48 is removable from the suction opening 24, but also the filter assembly 52 is removable from the carrier housing 62, specifically for cleaning and/or replacing purposes. Figs. 6 to 11 illustrate two examples of such an isolated filter assembly 52, by presenting either the included single filter elements in an isolated view or the filter assembly 52 with grease filter 52 and carbon filter element 56 coupled with each other.

Fig. 6 shows a first component of the filter assembly 52, namely the grease filter element 52', in an isolated view. The rectangular grease filter element 52' includes a rectangular grease filter surface 52'a, which is framed likewise by a rectangular (in a front view) grease filter frame 60. As not shown, the grease filter frame 60 is U-shaped in cross-section, in that enclosing the four lateral edges of the grease filter surface 52'a.

With Fig. 7 a second component of the filter assembly 52, namely the carbon filter element 56 is shown. Like the grease filter element 52', the carbon filter element 56 is rectangular, too. Moreover, the carbon filter element 56 is structured in general similar to the grease filter element 52', including a rectangular carbon filter surface 56a and a rectangular carbon filter frame 70, which, in the same way as the grease filter frame 60, is U-shaped in cross-section for enclosing the four lateral edges of the carbon filter surface 56a.

Both grease filter frame 60 and carbon filter frame 70 are made of metal, in particular by stainless steel.

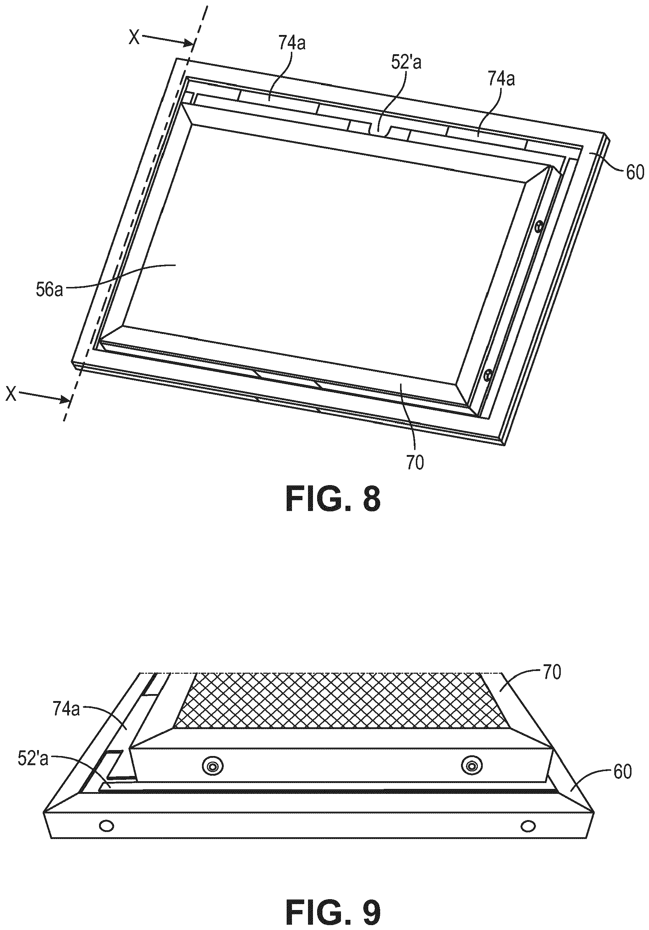

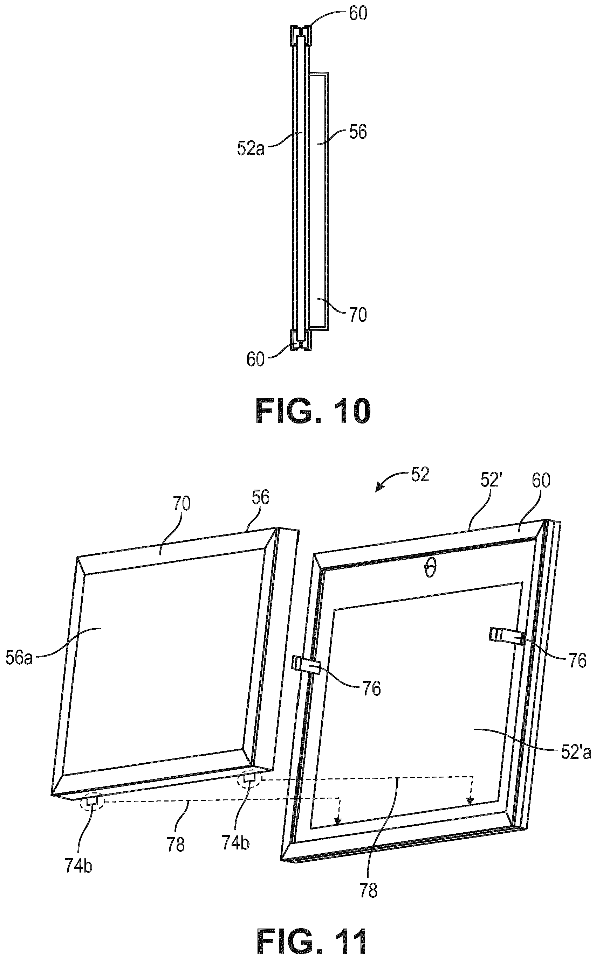

The perspective top view according to Fig. 8, the perspective side view according to Fig. 9 and the cross-sectional view according to Fig. 10, indicated by X-X in Fig. 8, illustrate that the carbon filter element 56 differs from the grease filter element 52' in a smaller dimensioning, both in height and width. Moreover, as can be best seen in Fig. 10, the structure of the carbon filter element 56 differs from the structure of the grease filter element 52 also in that the top side and both lateral sides of the carbon filter frame 70 is bordered by flat metal protrusions 72, which are oriented outwardly, i. e. arranged in parallel to the carbon filter surface 56a. Said flat metal protrusions 72 protrude from the rear side (according to the alignment in Fig. 7 of the carbon filter element 56) of the assigned frame part, which rear side also forms a contact area to the grease filter surface 52'a, when the filter elements 52' and 56 are coupled with each other as shown in Figs. 8 to 10. In that, the flat metal protrusions 72 provide an enlarged contact surface. The flat metal protrusion 72 on the top side of the carbon filter frame 70, which is centrally subdivided into two parts, further comprises two lugs 74a forming further protrusions of said top side of the carbon filter frame 70. Moreover, two further lugs 74b, having a smaller width compared to the lugs 74a at the top side of the carbon filter frame 70, protrude from the rear side (according to the alignment in Fig. 7 of the carbon filter element 56) of the bottom frame part, namely in opposite direction compared with the two lugs 74a at the top side of the carbon filter frame 70. All lugs 74a, 74b are arranged in the same plane.

The illustrations of the assembled filter assembly 52 according to Figs. 8 to 10 demonstrate that the grease filter frame 60 forms also the frame of the entire filter assembly 52, as it is adumbrated in Fig. 5, specifically for bracing the filter assembly 52 against and/or detachably coupling to one of the longer frame parts 66 of the rectangular carrier frame 64. The comparison between Figs. 8 to 10 and Fig. 5 also imply that previously described symbolic filter surface 52a is in reality a connection in series of two filter surfaces, namely of grease filter surface 52'a and carbon filter surface 56a.

The assembling process of the two filter elements 52', 56 of the first example of the second embodiment is as follows: initially, the carbon filter element 56 is aligned by having a small angle facing the grease filter element 52', forming an upside down "V". With this alignment, the two lugs 74a at the top side of the carbon filter frame 70 are inserted in the U-shaped top part of the grease filter frame 60, in fact, behind the front arm (according to the alignment in Fig. 6 of the grease filter element 52') of the U-shaped grease filter frame 60. When the two lugs 74a at the top side of the carbon filter frame 70 are completely inserted, the carbon filter element 56 is pivoted towards the grease filter surface 52'a until the carbon filter frame 70 makes contact with the grease filter surface 52'a, and the two lugs 74b at the bottom side of the carbon filter frame 70 with smaller width are arranged to be inserted in the U-shaped bottom part of the grease filter frame 60, namely behind the front arm (according to the alignment in Fig. 6 of the grease filter element 52') of the U-shaped bottom part of the grease filter frame 60. By means of a sliding movement of the carbon filter element 56 against the grease filter element 52', in that the carbon filter surface 56a slides along the grease filter surface 52'a, the two lugs 74b at the bottom side of the carbon filter frame 70 are inserted in the U-shaped bottom part of the grease filter frame 60, in order to engage behind the front arm of the U-shaped bottom part of the grease filter frame 60. Due to gravity, the lower frame part of the carbon filter element 56 partially rests on the lower frame part of the grease filter element 52', particularly when the filter assembly 52 is arranged in its inclined operating position as illustrated by Fig. 5. Further, the widths of the lugs 74a, 74b are calculated in such a way that the two lugs 74a at the top side of the carbon filter frame 70 are still partially inserted in the U-shaped top part of the grease filter frame 60, when the filter assembly 52 is arranged in its operating position, i. e. when the lower frame part of the carbon filter element 56 rests on the lower frame part of the grease filter element 52'.

Fig. 11 shows the two components of a second example of the second embodiment of the filter assembly 52 according to the present example. In the same way as with the first example of the second embodiment, these two components according to the second example are constituted by a grease filter element 52' and a carbon filter element 56. The coupling means, however, and consequently also the assembling process, differ from the first example of the second embodiment. The carbon filter frame 70 of the second example comprises, similar to the first example, two lugs 74b on its bottom frame part. In contrast to the first example of the second embodiment, however, no coupling means are arranged at the top part of the carbon filter frame 70. Instead, the lateral sides of the carbon filter frame 70 are retained by clamping force generated by two spring-loaded hooks 76, arranged at the lateral parts on the left and right side of the grease filter frame 60. These two spring-loaded hooks 76 not only care for a secure contact of the carbon filter frame 70 with the grease filter surface 52'a, but also prevent any lateral displacement of the carbon filter element 56.

Fig. 11 also indicates by dotted arrows 78 the first step of the assembling process of the filter arrangement according to the second example of the second embodiment. After alignment of the carbon filter element 56 by having an acute angle facing the grease filter element 52', the two lugs 74b at the bottom side of the carbon filter frame 70 are inserted in the U-shaped bottom part of the grease filter frame 60, in fact, behind the front arm (according to the alignment in Fig. 11 of the grease filter element 52') of the U-shaped grease filter frame 60, so that the two filter elements 52', 56 form a "V". Thereafter, the carbon filter element 56 is pivoted towards the grease filter surface 52'a until the carbon filter frame 70 makes contact with the grease filter surface 52'a. During this motion, the lateral sides of the carbon filter frame 70 are captured by the two spring-loaded hooks 76, and at the end of this motion, said lateral sides have snapped in and the carbon filter frame 70 is clamped between the hooks 76.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: combination appliance
- 12: cooking hob
- 14: downdraft extraction device
- 16: kitchen cabinet
- 18: kitchen countertop
- 20a,20b: cooking regions
- 22: worktop
- 24: suction opening
- 26: cover grid
- 28: casing
- 28a,28b: first and second casing parts
- 30: exhaust opening
- 32: base area
- 34: outlet grille
- 36: extraction fan
- 38: intake opening
- 40: fan outlet
- 42: fan housing
- 44: air duct
- 46^{1 to 5}: arrows indicating air flow
- 48: filter arrangement
- 50: filter carrier
- 52: filter assembly
- 52a: filter surface
- 52': grease filter element
- 52'a: grease filter surface
- 54: power boards
- 56: carbon filter element
- 56a: carbon filter surface
- 58: control electronics
- 60: frame, grease filter frame
- 62: carrier housing
- 64: carrier frame
- 66: longer frame part
- 68: lateral surfaces
- 70: carbon filter frame
- 72: flat metal protrusion
- 74a,b: lugs
- 76: spring-loaded hooks
- 78: dotted arrows

## Claims

1. A filter assembly (52) for a fume extraction unit (14), in particular an extraction hood or an extraction device (14) of a combination appliance (10), further comprising a cooking hob (12), the filter assembly (52) comprising at least a first filter element (52') and a second filter element (56), which at least first (52') and second (56) filter elements are arranged in or allocated to an air duct (44) and positioned adjacent to each other, in particular supported by a filter carrier (50), and particularly include at least one of
- a grease filter element (52'),
- an odour filter element (56),
- an air purification filter element or unit, for example a HEPA or a PECO filter element or unit,
- a moisture absorbing element,
wherein at least the first filter element (52'), in particular the first (52') and the second (56) filter elements, comprises a first coupling or supporting element (76; 60), which interacts with at least a part (70) or a portion or a section of the second filter element (56) and/or with a second coupling element (74a, 74b) arranged at or allocated to the second filter element (56), which interaction between the first coupling or supporting element (76; 60), on the one hand, and the at least a part (70) or a portion or a section of the second filter element (56) and/or with a second coupling element (74a, 74b), on the other hand, enables a joint handling or manipulation, in particular a joint relocation, of the first (52') and second (56) filter elements.

2. The filter assembly (52) according to claim 1, wherein the first (52') and second (56) filter elements are detachably and/or mechanically coupled with each other.

3. The filter assembly (52) according to claim 1 or 2, wherein the coupling and/or an uncoupling process between first (52') and second (56) filter elements includes
- a sliding movement of one of the first (52') and second (56) filter elements against the other one of the first (52') and second (56) filter elements, particularly a sliding movement in the direction of a filter surface (52'a, 56a), more particularly in the direction of a main surface (52'a, 56a) of at least one of the first (52') and second (56) filter elements,
and/or
- a pivoting motion between first (52') and second (56) filter elements, preferably performed or performable after a partial coupling, particularly comprising a lateral engaging and/or linking operation, of the first (52') and second (56) filter elements, more particularly an engaging and/or linking of frame sides of the first filter element (52') and the second filter element (56).

4. The filter assembly (52) according to anyone of the preceding claims, wherein the interaction between the first coupling or supporting element (76; 60), on the one hand, and the at least a part (70) or a portion or a section of the second filter element (56) and/or with a second coupling element (74a, 74b), on the other hand, is based on at least one of
- a snapping or latching mechanism,
- a clipping or clinching mechanism
- a screw connection,
- a magnetic force coupling,
- a bayonet coupling,
- a keyhole mounting,
- an insertion of flaps or lugs (74a, 74b), particularly in a frame (60) part.

5. The filter assembly (52) according to anyone of the preceding claims, wherein flaps or lugs (74a, 74b) are arranged at opposite sides of the, particularly rectangular, second filter element, which flaps or lugs (74a, 74b) engage with a, preferably U-shaped in cross-section, filter frame (60) of the, particularly rectangular, first filter element (52').

6. The filter assembly (52) according to anyone of the preceding claims, wherein at least one coupling or supporting element (76; 60) is included, which comprises a spring element or a spring-loaded means (76), preferably a spring-loaded hook (76), the spring element or spring-loaded means (76) in particular being arranged at a first one of the first (52') and second (56) filter elements and engaging with a second one of the first (52') and second (56) filter elements, in particular engaging behind a frame section of the second one of the first (52') and second (56) filter elements.

7. The filter assembly (52) according to claim 6 or 7, wherein at least the second filter element (56), preferably the first (52') and the second (56) filter element, is vertically aligned or is inclined from the vertical and at least a part of a bottom section of the second filter element (56) rests on the first filter element (52'), in particular on a bottom section of the first filter element (52'), the bottom section of the first filter element (52') and/or the bottom section of the second filter element (56) preferably being a lower frame part of the first (52') and/or second (56) filter element.

8. The filter assembly (52) according to anyone of the preceding claims, wherein at least one of the at least first (52') and second (56) filter elements, preferably all of the at least first (52') and second (56) filter elements, is of a flat shape.

9. The filter assembly (52) according to anyone of the preceding claims, comprising a plurality of filter elements (52', 56), specifically at least a first, a second and a third filter elements (52', 56), in particular two grease filter elements (52') and one odour filter element (56), the plurality of filter elements (52', 56) preferably being connected in series and/or being interconnected at least in pairs.

10. A fume extraction unit (14) comprising a filter assembly (52) according to anyone of the preceding claims, wherein the filter assembly (52) is arranged in or allocated to an air duct (44) of the fume extraction unit (14), and wherein the fume extraction unit (14) particularly further comprises a, preferably detachable, filter carrier (50) for the arrangement of the filter assembly (52) in the fume extraction unit (14).

11. The fume extraction unit (14) according to claim 10, wherein the filter assembly (52) and/or the filter carrier (50) is or are configured or designed to enable optionally a joint detachment of the at least first (52') and second (56) filter elements or an isolated detachment of a first one of the at least first (52') and second (56) filter elements from a second one of the at least first (52') and second (56) filter elements, in particular without a detachment of the second one of the at least first (52') and second (56) filter elements from the filter carrier (50).

12. The fume extraction unit (14) according to claim 10 or 11, wherein the fume extraction unit (14), in particular the filter assembly (52) and/or at least one of the first (52') and second (56) filter elements and/or the filter carrier (50), comprises
- at least one coding means for securing
and/or
- at least one sensing means configured to monitor a correct arrangement of the first filter element (52') and/or the second filter element (56) in the fume extraction unit (14), in particular in the filter carrier (50) of the fume extraction unit (14), preferably in a correct assignment of first (52') and second (56) filter elements relative to each other.

13. The fume extraction unit (14) according to anyone of the claims 10 to 12, wherein the filter assembly (52) includes at least a first filter element (52') and a second filter element (56), which are the result of a user's selection from a plurality of different types of filter elements (52', 56) provided for the fume extraction unit (14).

14. A combination appliance (10) comprising a cooking hob (12), which comprises a cover plate or worktop (22), in particular a glass plate, having an opening (24) or a recess formed therein, and an extraction device (14), which is arranged below the cooking hob (12), in particular below the cover plate or worktop (22) of the cooking hob (12), the extraction device (14) preferably being or comprising the fume extraction unit (14) according to anyone of the claims 8 to 11, wherein the extraction device (14) comprises
- a fan (36) for sucking air from the area above the cooking hob (12) through the opening (24) or recess of the cover plate or worktop (22) and conveying it through an air duct (44) of the extraction device (14),
- the filter assembly (52) according to anyone of the claims 1 to 7 including the at least first (52') and second (56) filter elements, the filter assembly (52) being arranged in or allocated to the air duct (44) of the extraction device (14), and
- an outlet opening (30) for exhausting the conveyed air, in particular into the ambient air,
wherein the filter assembly (52) is preferably arranged or arrangeable upstream of the fan (36) and downstream of the opening (24) or recess,
and wherein the at least first (52') and second (56) filter elements preferably comprise
- at least one particle filter (52'), in particular a grease particle filter, for removing particles from the air sucked in, and/or
- at least one odour filter (56), preferably a carbon filter, for removing odours from the air sucked in.

15. The combination appliance (10) according to claim 14, further comprising a filter carrier (50), which receives and/or supports the filter assembly (52) or at least one of the first (52') and second (56) filter elements, in particular at least the first filter element (52').

16. The combination appliance (10) according to claim 14 or 15, wherein the filter assembly (52) and/or at least one of the first (52') and second (56) filter elements of the filter assembly (52) and/or the filter carrier (50) is or are removable from the combination appliance (10), preferably through the opening (24) or recess, in particular removable either after removal of a lid or grid (26), which covers or is configured to cover the opening (24) or recess of the cover plate or worktop (22), or in combination with the lid or grid (26) .

17. The filter assembly (52) or the fume extraction unit (14) or the combination appliance (10) according to anyone of the preceding claims,
**characterized by**
a tool-free assembly and/or disassembly of at least one of the first (52') and second (56) filter elements, preferably of the coupled first (52') and second (56) filter elements, more preferably of the entire filter assembly (52).
